# EUROPÄISCHE PATENTSCHRIFT

(11) **EP 1 636 865 B1**
(45) Veröffentlichungstag und Bekanntmachung des Hinweises auf die Patenterteilung: **23.03.2011**
(21) Anmeldenummer: 04724267.2
(22) Anmeldetag: 30.03.2004
(51) Int. Cl.: H01M 4/88

(54) **MEMBRAN-ELEKTRODEN-EINHEIT FÜR DIREKT METHANOL-BRENNSTOFFZELLEN UND VERFAHREN ZU IHRER HERSTELLUNG**
MEMBRANE-ELECTRODE UNIT FOR DIRECT METHANOL FUEL CELLS AND METHOD FOR THE PRODUCTION THEREOF
UNITE MEMBRANE-ELECTRODES POUR PILES A COMBUSTIBLE METHANOL-DIRECT ET PROCEDE DE PRODUCTION CORRESPONDANT

(30) Priorität: 04.06.2003 DE 10325324
(43) Veröffentlichungstag der Anmeldung: 22.03.2006
(73) Patentinhaber: Umicore AG & Co. KG, 63457 Hanau-Wolfgang (DE)
(72) Erfinder: DZIALLAS, Holger, 59469 Ense (DE); WITTPAHL, Sandra, 91074 Herzogenaurach (DE); KÖHLER, Joachim, 63584 Gründau/Haingründau (DE)
(74) Vertreter: Vossius & Partner
(86) Internationale Anmeldenummer: PCT/EP2004/003362
(87) Internationale Veröffentlichungsnummer: WO 2004/109828

(56) Entgegenhaltungen:
- WO-A-02/45195
- US-A1- 2001 028 975
- DOHLE H ET AL: "Heat and power management of a direct-methanol-fuel-cell (DMFC) system" JOURNAL OF POWER SOURCES, ELSEVIER, AMSTERDAM, NL, Bd. 111, Nr. 2, 23. September 2002 (2002-09-23), Seiten 268-282, XP004381135 ISSN: 0378-7753
- DOHLE H ET AL: "Development of a compact 500 W class direct methanol fuel cell stack" JOURNAL OF POWER SOURCES, ELSEVIER, AMSTERDAM, NL, Bd. 106, Nr. 1-2, 1. April 2002 (2002-04-01), Seiten 313-322, XP004348703 ISSN: 0378-7753

## Beschreibung

Die Erfindung betrifft eine Membran-Elektroden-Einheit für elektrochemische Vorrichtungen, insbesondere für Direkt-Methanol-Brennstoffzellen (engl. Direct methanol fuel cells, DMFC) sowie ein Verfahren zu ihrer Herstellung.

Brennstoffzellen wandeln einen Brennstoff und ein Oxidationsmittel örtlich voneinander getrennt an zwei Elektroden in Strom, Wärme und Wasser um. Als Brennstoff kann Wasserstoff, Methanol oder ein wasserstoffreiches Gas, als Oxidationsmittel Sauerstoff oder Luft dienen. Der Vorgang der Energieumwandlung in der Brennstoffzelle zeichnet sich durch eine große Schadstofffreiheit und einen besonders hohen Wirkungsgrad aus. Aus diesem Grunde gewinnen Brennstoffzellen zunehmend Bedeutung für alternative Antriebskonzepte, Hausenergieversorgungsanlagen sowie portable Anwendungen.

Die Membranbrennstofrzellen, beispielsweise die Polymerelektrolyt-Brennstoffzelle (englisch: PEMFC) und die Direkt-Methanol-Brennstoffzelle (englisch: DMFC) eignen sich aufgrund ihrer niedrigen Betriebstemperatur, ihrer kompakten Bauweise und ihrer Leistungsdichte für viele mobile und stationäre Einsatzbereiche.

DMFC-Brennstoffzellen sind (wie PEM-Brrennstoffzellen) in einer stapelweisen Anordnung ("Stack") aus vielen Brennstoffzelleneinheiten aufgebaut. Diese sind zur Erhöhung der Betriebsspannung elektrisch in Reihe geschaltet.

Das Kernstück einer DMFC-Brennstoffzelle ist die sogenannte Membran-Elektroden-Einheit (MEE). Die MEE besteht aus 5 Lagen: aus der Protonen leitenden Membran (Polymerelektrolyt- oder Ionomermembran), aus den beiden Gasverteilerschichten (engl. "gas diffusion layers", GDLs oder "backings") an den Membranseiten und den zwischen Membran und Gasverteilersubstraten liegenden Elektrodenschichten. Sie wird daher auch als 5-lagige MEE bezeichnet. Eine der Elektrodenschichten ist als Anode für die Oxidation von Methanol und die zweite Elektrodenschicht als Kathode für die Reduktion von Sauerstoff ausgebildet.

Die Polymerelektrolyt-Membran besteht aus Protonen leitenden Polymermaterialien. Diese Materialien werden im folgenden auch kurz als Ionomere bezeichnet. Bevorzugt wird ein Tetrafluorethylen-Fluorvinylether-Copolymer mit Sulfonsäuregruppen verwendet. Dieses Material wird zum Beispiel unter dem Handelsnamen Nafion^{®} von DuPont vertrieben. Es sind jedoch auch andere, insbesondere fluorfreie Ionomermaterialien, wie dotierte sulfonierte Polyetherketone oder dotierte sulfonierte oder sulfinierte Arylketone bzw. Polybenzimidazole einsetzbar. Geeignete Ionomermaterialien sind von O. Savadogo in "Journal of New Materials for Electrochemical Systems" . I, 47-66 (1998) beschrieben. Für die Verwendung in DMFC-Brennstoffzellen benötigen diese Membranen im allgemeinen eine Dicke zwischen 30 und 200 µm.

Die Gasverteilerschichten bestehen gewöhnlich aus Kohlefaserpapier, Kohlefaservlies oder Kohlefasergewebe und ermöglichen den Zugang des Methanols zur Reaktionsschicht auf der Anode sowie die Ableitung des sich bildenden Wassers auf der Kathode bei gleichzeitiger guter elektrischer Leitfähigkeit. Die Gasverteilerschichten können mit PTFE hydrophobiert sein und/oder eine Ausgleichsschicht (z.B. aus Ruß/PTFE) besitzen.

In der DMFC wird Methanol (bzw. eine wäßrige Methanollösung) direkt zu CO₂, Wasser und elektrischem Strom umgesetzt. Dabei spricht man von einer "liquid feed" Anordnung. Die entsprechenden Reaktionen sind:

| | |
|---|---|
| Anode: | CH₃OH + H₂O + → CO₂ + 6 H + + 6 e- |
| | |
| Kathode: | 3/2 O₂ + 6 H + + 6 e- → 3 H₂O |
| | |
| Gesamtreaktion: | CH₃OH + 3/2 O₂ → CO₂ + 2 H₂O |

Die Elektrodenschichten für die Anode und Kathode der DMFC enthalten ein Protonen leitendes Polymer und Elektrokatalysatoren, welche die jeweilige Reaktion (Oxidation von Methanol beziehungsweise Reduktion von Sauerstoff) katalytisch unterstützten. Als katalytisch aktive Komponenten wird auf der Anode bevorzugt ein bimetallischer Platin/Ruthenium-Katalysator und auf der Kathodenseite vorzugsweise ein Platinkatalysator eingesetzt. In der Mehrzahl verwendet man sogenannte Trägerkatalysatoren, bei denen die katalytisch aktiven Platingruppenmetalle in hochdisperser Form auf die Oberfläche eines leitfähigen Trägermaterials, beispielsweise Ruß, aufgebracht wurden. Es können aber auch Pt und PtRu- Pulver (sog. Mohre) verwendet werden. Typischerweise liegen die Edelmetall-gesamtbeladungen einer DMFC-MEE bei etwa 4 bis 10 mg Edelmetall/cm².

Die maximalen Leistungsdichten (peak power density) liegen im Bereich von 100 bis 500 mW/cm² (für einen Betrieb bei 60 bis 80°C mit verdünnter Methanol-Lösung.

Die großen Herausforderungen bei der Entwicklung der DMFC Brennstoffzellen-Technologie sind
- die bisher zu niedrige Leistungsdichte (bedingt durch die langsame Reaktionsgeschwindigkeit der Methanol-Oxidation),
- der Durchtritt des Methanols durch die Membran an die Kathodenseite ("MeOH crossover") sowie
- die hohe Beladung mit edelmetallhaltigem Katalysator.

Insgesamt muß also eine hohe Leistungsdichte der DMFC bei gleichzeitig reduzierter Edelmetallbeladung erreicht werden.

Die US 5,599,638 beschreibt eine liquid-feed DMFC basierend auf einer ionenleitfähigen Membran. Dabei werden mit Nafion® imprägnierte Gasverteilersubstrare und/oder Elektroden verwendet. Typische Anteile des Imprägnierungstnittels liegen bei 2 bis 10 Gew.% des Gasverteilersubstrates. Die damit erzielte Erhöhung der Leistungsdichte sowie die Reduktion des Edelmetallverbrauches ist jedoch noch nicht zufriedenstellend.

US 6,187,467 offenbart ebenfalls eine Imprägnierung einer Elektrode mit Nafion® zur Verwendung in einer DNFC. Der Elektrokatalysator wird nachträglich auf die imprägnierte Elektrode aufgebracht. Die damit erzielte Leistungsdichte der DMFC ist nicht zuinedenstellend.

In US 6,221,523 wird die direkte Beschichtung einer Ionomermembran mit Katalysatoren zur Herstellung von MEEs für DMFC beschrieben. Beide Katalysatorschichten (sowohl die Anodenschicht als auch die Kathodenschicht) sind in direktem Kontakt mit der Membran. Erst anschließend werden die Gasverteilersubstrare angebracht, welche keine Katalysatorbeschichtung besitzen. Es wird eine höhere Leistungsdichte erzielt, die allerdings noch nicht ausreichend ist.

US 2001/028975 beschreibt eine Membran-Elektroden-Einheit, die ein Anodengasverteilersubstrat, eine Anodenkatalysatorschicht, eine Ionomer-Membran, eine Katodenkatalysatorschicht sowie ein Katalysatorgasverteiler-Substrat aufweist, wobei die Anodenkatalysatorschicht auf dem Anodengas-Verteilersubstrat angebracht ist, wohingegen die Katodenkatalysatorschicht sich direkt auf der Ionomer-Membran befindet.

Die vorliegende Erfindung befasst sich daher mit der Bereitstellung von verbesserten 5-lagigen Membran-Elektroden-Einheiten (MEEs) für Direkt-Methanol-Brennstoffellen (DMFC). Die erfindungs gemäßen MEEs weisen eine hohe Leistungsdichte bei gleichzeitig geringem Edelmetallverbrauch auf.

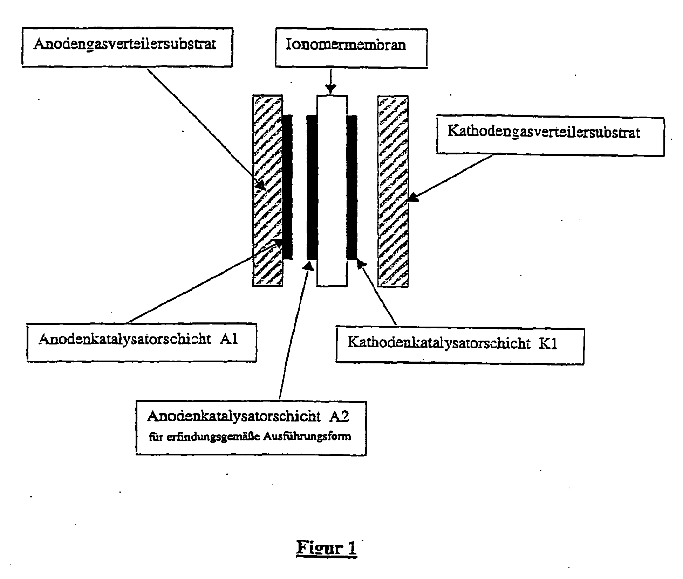

MEEs für DMFC bestehen beispielsweise aus dem Anodengasverteilersubstrat, der Anodenkatalysatorschicht A1, der Ionomermembran, der Kathodenkatalysatorschicht A1 und dem Kathodengasverteilersubstrat und sind dadurch gekennzeichnet, dass die Anodenkatalysatorschicht A1 auf das Anodengasverteilersubstrat aufgebracht ist, während sich die Kathodenkatalysatorschicht direkt auf der Membran befindet. Dieser Aufbau ist in **Figur 1** dargestellt, wenn man die Anodenkatalysatorschicht A2 wegläßt.

In der erfindungsgemäßen Ausführungsform ist die Anodenschicht als eine sogenannten "Doppelschichtanode" ausgebildet. Diese Doppelschichtanode besteht aus einer Anodenkatalysatorschicht, die auf das Gasverteilersubstrat aufgebracht ist (A1) und einer Anodenkatalysatorschicht, die direkt auf die Ionomermembran aufgebracht ist (A2), während die Kathodenkatalysatorschicht direkt auf der Ionomermembran aufgebracht ist (K1) (siehe ebenfalls **Figur 1**).

Ein Kennzeichen der Ausführungsformen der Erfindung ist das Vorhandensein einer Kathodenkatalysatorschicht, die direkt auf der Ionomermembran angebracht ist, während die Anodehkatalysatorschicht auf der Ionomermembran und zusätzlich ganz oder teilweise auf dem Gasverteilersubstrat angebracht ist.

Dadurch lassen sich erhebliche Vorteile erzielen, da sämtliche Katalysatorschichten unabhangig voneinander hergestellt und maßgeschneidert werden können.

Die Katalysatorschichten können voneinander verschieden sein. Sie können aus unterschiedlichen Katalysatortinten aufgebaut sein und unterschiedliche Katalysatoranteile und Edehmetallbeladungsn (mg Pt/cm²) besitzen. In den Tinten können unterschiedliche Elektrokatalysatoren (edelmetallhaltise oder unedslmetallhaltige Trägerkatalysatoren sowie ungeträgerte Edelmetallmohre) zum Einsatz kommen.

Beispielsweise kann auf der Anodenseite die Anodenkatalysatorschicht mit einer großen Schichtdicke, einer hohen Katalysdatorbeladung, einer hohen Porosität und einer besseren Hydrophilie gefertigt werden, während auf der Kathodenseite die Kathodenkatalysatorschicht möglichst dünn und mit einer guten Anbindung zur Ionomermembran gefertig werden kann.

Typischerweise liegen die Schichtdicken der Anodenkatalysatorscbicht bei ca. 20 bis 100 micron, während die Kathodenkatalysatorschichten bei 5 bis 50 micron liegen. Die mittleren Katalysatorbeladungen der erfindungsgemäßen MEE liegen auf der Anodenseite bei 0,25 - 6 mg Edelmetall/cm², auf der Kathodenseite bei 0,1 bis 2,5 mg Edelmetall/cm².

Überraschenderweise hat sich gezeigt, daß durch die dünne Schichtdicke und gute Membran-Anbindung der Kathodenkatalysatorschicht Verbesserungen hinsichtiich der Leistungsdichte der DMFC erzielen lassen. Bedingt durch die geringe Schichtdicke der Kathodenkatalysatorschicht wird vermutlich das entstehende Kathodenwasser schneller abtransportiert. Dadurch kommt es zu geringeren Massentransportverlusten in der MEE. Dies führt wiederum zu einer erheblich verbesserten Leistungsdichte, insbesondere im hohen Stromdichtebereich. Weiterhin wird möglicherweise die Sauerstoffdiffusion in der dünnen Kathodenkatalysatorschicht verbessert.

Zur Herstellung der Kathodenseite der erfindungsgemäßen MEE können die bekannten Verfahren zur direkten Beschichtung von Ionomermembranen herangezogen werden (beispielsweise aus der EP 1 037 295). Bei der Ausführungsform der Doppelschichtanode (Schichten A1 und A2) wird die Schicht A2 ebenfalls durch eine Direktbeschichtung der Ionomermembran hergestellt.

Zur Herstellung der Anodenschicht A1 wird ein Gasverteilersubstrat (ggf. hydrophobiert und/oder mit einer. Microlayer beschichtet) unter Verwendung von bekannten Beschichtungsverfahren mit Katalysatortinte beschichtet.

Zur Herstellung der MEE werden beide Gasverteilersubstrate passergenau mit der Ionomermembran kombiniert und mit Hilfe von Druck und Temperatur, gegebenenfalls unter Verwendung von Dichtung- oder Klebematerial zusammengefügt. Mit dem geeigneten Einrichtungen ist die Herstellung der erfindungsgemäßen MEEs auch in kontinuierlichen Verfahren möglich. Dabei kommen bandförmige Substrate (Membrane, Gasverteilersubstrate) zum Einsatz.

Die nachfolgenden Beispiele sollen die Erfindung näher erläutern ohne den Schutzbereich einzuengen.

### Beispiel 1 (Ausführungsform 1, nicht erfindungsgemäß)

Herstellung der Anodenschicht: Es wird ein Gasverteilersubstrat (Typ Sigracet, hydrophobiert, mit Ausgleichsschicht, Fa. SGL) im Siebdruckverfahren mit einer Anodenkatalysatorschicht versehen. Das Druckformat beträgt 7,5 x 7,5 cm (aktive. Fläche ca. 50 cm²).

### Zusammensetzung der Anodentinte:

| | |
|---|---|
| 18, 0 g | PtRu-Trägerkatalysator (60 Gew.-% PtRu auf Ruß; Katalysator entsprechend US 6,007,934) |
| 60,0 g | Nafion®-Lösung (15 Gew.-% in Wasser) |
| 12,0 g | Wasser (vollentsalzt) |
| 10,0 g | Propylenglykol |
| 100,0 g | |

Nach der Trocknung bei 80°C für 10 min liegt die Schichtdicke der Anodenkatalysatorschicht bei 60 micron, die Katalysatorbeladung beträgt 2,25 mg PtRu/cm². Die katalysatorbeschichtete Elektrode wird anschließend bei 80°C in vollentsalztem Wasser gespült und dann getrocknet.

Anschließend wird eine 125 µm dicke bandförmige Polymerelektrolyt-Membran (Nafion 115®) auf der Vorderseite mit einer Kathodentinte beschichtet (Prozess gemäß EP 1037 295).

### Zusammensetzung der Kathodentinte:

| | |
|---|---|
| 18, 0 g | Pt-Trägerkatalysator (60 Gew.-% Pt auf Ruß) |
| 60,0 g | Nafion®-Lösung (15 Gew.-% in Propylenglykol) |
| 6,0 g | Wasser (vollentsalzt) |
| 16,0 g | Propylenglykol |
| 100, 0 g | |

Nach der Trocknung bei 80°C für 10 min liegt die Schichtdicke der Kathodenkatalysatorschicht bei 20 micron, die Katalysatorbeladung beträgt 1,2 mg Pt/cm². Die katalysatorbeschichtete Elektrode wird gespült in 80°C in voll entsalztem Wasser.

Aus der einseitig beschichteten Ionomermembran wird ein 8 x 8 cm großes Stück mit einer aktiven Fläche von 50 cm² herausgeschnitten. Zur Herstellung einer 5-lagigen MEE wird dann das mit Anodenkatalysator beschichtete Gasverteilersubstrat mit der beschichteten Ionomermembran und einem Kathodengasverteilersubstrat (bestehend aus hydrophobiertem Kohlefaserpapier, Typ Sigracet, SGL) unter Temperatur und Druck verpresst (130°C, 150 N/cm²).

Die aktive Zellfläche beträgt 50 cm², Bei den Leistungstests wird eine 1-molare Methanol-Lösung in Wasser verwendet, der Methanolfluß beträgt 4 ml/min, die Zelltemperatur beträgt 60°C. Als Kathodengas wird Luft eingesetzt. Für diese Zelle wird eine sehr gute Leistungsdichte gemessen.

### Beispiel 2 (erfindunsgemäße Ausführungsform 2)

Die Herstellung der Anodenschicht erfolgt wie in Beispiel 1 beschrieben. Zusätzlich zur Anodenschicht auf dem Gasverteilersubstrat (= A1) wird die Rückseite der Ionomermembran nach Beschichtung mit dem Kathodenkatalysator (Schicht K1) mit einer weiteren Anodenkatalysatorschicht versehen (= Schicht A2). Der Auftrag dieser Schicht auf die Membran erfolgt wie in Beispiel 1 beschrieben, es wird jedoch eine entsprechende Anodenkatalysatortinte verwendet.

Aus der zweiseitig beschichteten Ionomermembran wurde ein 8 x 8 cm großes Stück mit einer aktiven Fläche von 50 cm² herausgeschnitten. Zur Herstellung einer MEE wird dann das mit Anodenkatalysator beschichtete Gasverteilersubstrat (Schicht A1) mit der beidseitig beschichteten Ionomermembran (Schicht A2 und K1) sowie einem Kathodengasverteilersubstrat (bestehend aus hydrophobiertem Kohlefaserpapier, Typ Sigracet, SGL) deckungsgleich zusammengefügt und in eine DMPC-Brennstoffzelle eingebaut.

Die aktive Zellfläche beträgt 50 cm² . Bei den Leistungstests wird eine 1-molare Methanol-Lösung in Wasser verwendet, der Methanolfluß beträgt 4 ml/min, die Zelltemperatur beträgt 60°C. Als Kathodengas wird Luft eingesetzt. Für diese Zelle wird ebenfalls eine sehr gute Leistungsdichte gemessen.

## Patentansprüche

1. Membran-Electroden-Einhtit für Direkt-Methanol-Brennstoffzellen, enthaltend ein Anodengasvertilersubstrat, eine Anodenkatatysatorschicht, eine Ionomermembran, eine Kathodenkatalysatorschicht sowie ein Kathodengasverteilersubstrat, wobei die Anodenkatatysatorschicht sowohl auf dem Anodengasverteilersubstrat als auch auf der Ionomermembran aufgebracht ist, und die Kathodenkatalysatorschicht sich direkt auf der Ionomermembran befindet.

2. Membran-Elektroden-Einheit nach Anspruch 1, wobei die Schichtdicke der Anodenkatalysatorschicht zwischen 20 und 200 µm, die Schichtdicke der Kathodenkatalysatorschicht zwischen 5 und 50 µm liegt.

3. Membran-Elektroden-Einheit nach Anspruch 1 oder 2, wobei die Edelmetallbeladung der Anodenschicht zwischen 0,25 und 6 mg Edelmetall/cm² und die Edelmetallbeladung der Kathodenschicht zwischen 0,1 und 2,5 mg Edelmetall/cm² liegt.

4. Membran-Elektroden-Einheit nach einem der Ansprüche 1 bis 3, wobei als Anodenkatalysator geträgerte oder ungeträgerte bimetallische Platin/Ruthenium-Katalysatoren verwendet werden.

5. Membran-Elektroden-Einheit nach einem der Ansprüche 1 bis 4, wobei als Kathodenkatalysator geträgerte oder ungeträgerte platinhaltige Katalysatoren verwendet werden.

6. Verfahren zur Erstellung einer Membran-Elektroden-Einheit für Direkt-Methanol-Brennstoffzellen, umfassend die Beschichtung eines Anodengasveneilersubstrates mit Anodenkatalysatortinte, die Trocknung des beschichteten Anodengasverteilersubstrates, die Beschichtung einer Ionomermembran auf der ersten Seite mit Kathodenkatalysatortinte, die Trocknung der einseitig beschichteten Ionomermembran, die Beschichtung der Ionomermembran auf der zweiten Seite mit Anodenkatalysatortinte, die Trocknung der zweiseitig beschichteten Ionomermembran, sowie das Zusammenfügen des beschichteten Anodengasveneilersubstrates mit der zweiseitig beschichteten Ionomermembran und dem Kathodengasverteilersubstrat.

7. Verfahren nach Anspruch 6, weiterhin umfassend die Spülung der katalysatorbeschichteten Gasverteilersubstrate bzw. Ionomermembranen mit Wasser.

8. Verwendung der Membran-Elektroden-Einheiten nach einem der Ansprüche 1 bis 5 zur Herstellung von Direkt-Methanol-Brennstoffzellen zum Betrieb mit flüssigem Methanol/wassergemischen bei Temperaturen zwischen 20 und 90°C.

## Claims

1. A membrane electrode unit for direct methanol fuel cells, containing an anode gas diffusion substrate, an anode catalyst layer, an ionomer membrane, a cathode catalyst layer and a cathode gas diffusion substrate, the anode catalyst layer being applied both to the anode gas diffusion substrate and to the ionomer membrane, and the cathode catalyst layer being present directly on the ionomer membrane.

2. The membrane electrode unit as claimed in claim 1, the layer thickness of the anode catalyst layer being between 20 and 200 micron and the layer thickness of the cathode catalyst layer being between 5 and 50 micron.

3. The membrane electrode unit as claimed in any of claims 1 to 2, the noble metal load of the anode layer being between 0.25 and 6 mg of noble metal/cm² and the noble metal load of the cathode layer being between 0.1 and 2.5 mg of noble metal/cm²_{.}

4. The membrane electrode unit as claimed in any of claims 1 to 3, supported or unsupported bi metallic platinum/ruthenium catalysts being used as anode catalyst.

5. The membrane electrode unit as claimed in any of claims 1 to 4, supported or unsupported platinum-containing catalysts being used as cathode catalyst.

6. A method for the production of a membrane electrode unit for direct methanol fuel cells, comprising the coating of an anode gas diffusion substrate with anode catalyst ink, the drying of the coated anode gas diffusion substrate, the coating of an ionomer membrane on one side with cathode catalyst ink, the drying of the ionomer membrane coated on one side, the coating of the iononmer membrane on the other side with anode catalyst ink, the drying of the ionomer membrane coated on both sides and the uniting of the coated anode gas diffusion substrate with the ionomer membrane coated on both sides and the cathode gas diffusion substrate.

7. The method as claimed in claim 6, furthermore comprising the washing of the catalyst-coated gas diffusion substrates or ionomer membranes with water.

8. The use of the membrane electrode units as claimed in any of claims 1 to 5 for the production of direct methanol fuel cells for operation with liquid methanol/water mixtures at temperatures between 20 and 90°C.

## Revendications

1. Unité membrane-électrodes pour des piles à combustible méthanol-direct comportant un substrat de répartition du gaz anodique, une couche de catalyseur anodique, une membrane ionomère, une couche de catalyseur cathodique ainsi qu'un substrat de répartition de gaz cathodique,
unité dans laquelle la couche de catalyseur anodique est appliquée à la fois sur le substrat de distribution de gaz anodique et sur la membrane ionomère et la couche de catalyseur cathodique se trouve directement sur la membrane ionomère.

2. Unité membrane-électrodes selon la revendication 1,
dans laquelle
l'épaisseur de la couche de catalyseur anodique est comprise entre 20 et 200 µm, l'épaisseur de la couche de catalyseur cathodique est comprise entre 5 et 50 µm.

3. Unité membrane-électrodes selon la revendication 1 ou 2,
dans laquelle
la charge de métal noble de la couche anodique est comprise entre 0,25 et 6 mg de métal noble/cm² et la charge de métal noble de la couche cathodique est comprise entre 0,1 et 2,5 mg de métal noble/cm².

4. Unité membrane-électrodes selon l'une des revendications 1 à 3,
dans laquelle
comme catalyseur anodique, on utilise des catalyseurs bimétal platine/ruthénium avec ou sans support.

5. Unité membrane-électrodes selon l'une des revendications 1 à 4,
dans laquelle
comme catalyseur cathodique, on utilise des catalyseurs contenant du platine avec ou sans support.

6. Procédé de fabrication d'une unité membrane-électrodes pour des piles à combustible méthanol-direct comprenant le revêtement d'un substrat de répartition de gaz anodique avec de l'encre de catalyseur anodique, le séchage du substrat de distribution anodique, revêtu, le revêtement d'une membrane ionomère sur la première face avec une encre de catalyseur cathodique, le séchage de la membrane ionomère revêtue sur une face, le revêtement de la membrane ionomère appliqué à la seconde face avec de l'encre de catalyseur anodique, séchage de la membrane ionomère revêtue sur ses deux faces et l'assemblage du substrat de distribution de gaz anodique, revêtu, avec la membrane ionomère à revêtement sur les deux faces, et le substrat de répartition de gaz cathodique.

7. Unité membrane-électrodes selon la revendication 6,
comprenant en outre le rinçage des substrats de répartition de gaz à revêtement de catalyseur ou membrane ionomère avec de l'eau.

8. Utilisation des unités membrane-électrodes selon l'une des revendications 1 à 5, pour fabriquer des piles à combustible méthanol-direct pour fonctionner avec des mélanges eau/méthanol, à l'état liquide à des températures comprises entre 20° et 90°C.
